# EUROPÄISCHE PATENTSCHRIFT

(11) **EP 1 783 380 B1**
(45) Veröffentlichungstag und Bekanntmachung des Hinweises auf die Patenterteilung: **17.09.2008**
(21) Anmeldenummer: 06023014.1
(22) Anmeldetag: 06.11.2006
(51) Int. Cl.: F16B 13/12

(54) **Dübel, insbesondere für Vollbaustoffe**
Dowel, especially for building materials
Cheville, particulierement pour materiaux de construction

(30) Priorität: 08.11.2005 DE 202005017435 U
(43) Veröffentlichungstag der Anmeldung: 09.05.2007
(73) Patentinhaber: Berner GmbH, 74653 Künzelsau (DE)
(72) Erfinder: Runge, Erich, 74653 Künzelsau (DE)
(74) Vertreter: Sties, Jochen

(56) Entgegenhaltungen:
- EP-A- 0 566 762
- EP-A1- 0 441 691
- DE-B1- 2 231 809
- DE-U1- 9 305 762
- DE-U1-8202004 019 77

## Beschreibung

Die Erfindung betrifft einen Dübel, insbesondere für Vollbaustoffe, gemäß dem Oberbegriff des Anspruchs 1.

Bei Dübeln für Vollbaustoffe (beispielsweise Beton) erfolgt die Verankerung des Dübels in der für seine Aufnahme vorgesehenen Bohrung im wesentlichen durch Flächenpressung zwischen der Außenseite des Dübels und der Innenwand der Bohrung. In einigen Fällen ergibt sich zusätzlich eine Verzahnungswirkung.

Die bisher bekannten Dübel waren hinsichtlich der Auszugskräfte nicht immer zufriedenstellend, insbesondere wenn unterschiedliche Schrauben in sie eingeschraubt wurden.

In der gattungsgemäßen DE 20 2004 019 778 U1 ist ein viersegmentiger Dübel gezeigt, dessen Segmente an ihrer innenliegenden Seite jeweils in radialer Richtung eine Einkerbung aufweisen. Hierdurch einsteht ein Schraubenkanal, der in jedem Segment von einer über Eck verlaufenden Fläche begrenzt wird.

Eine ähnliche Gestaltung ist in der DE 2 231 809 für einen dreisegmentigen Dübel dargestellt.

Die EP 0 566 762 A1 zeigt einen Dübel, bei dem der Schraubenkanal durch die tangential ausgerichteten Segmentinnenflächen begrenzt wird.

Die Aufgabe der Erfindung besteht darin, einen Dübel zu schaffen, der sich durch besonders hohe Auszugskräfte auszeichnet.

Zur Lösung dieser Aufgabe sind erfindungsgemäß die Merkmale des Anspruchs 1 vorgesehen. Die Erfindung beruht auf der Erkenntnis, daß die Ausgestaltung der Segmente, aus denen der Schaft des Dübels besteht, im Stand der Technik ausschlaggebend für eine Reihe von Problemen war. Die Freiräume zwischen den einzelnen Segmenten haben sich im Stand der Technik in radialer Richtung erstreckt, haben sich also in der Mitte getroffen. Die dadurch gebildeten Segmente haben im Querschnitt die Form von Tortenstücken, deren Spitzen einander zugewandt sind. Zwischen den Segmenten ist dadurch ein Schraubenkanal definiert, der von mehreren einander gegenüberliegenden Kanten abgegrenzt wird, nämlich von den Spitzen der "Tortenstücke". Wenn eine Schraube in diesen Schraubenkanal eingeschraubt wird, trifft sie auf vergleichsweise wenig Material. Insbesondere bei einer Spanplattenschraube, die sich durch einen vergleichsweise geringen Kerndurchmesser und ein scharfkantiges Gewinde auszeichnet, wird das Material der Segmente sehr leicht verdrängt, so daß die Schraube keine großen Spreizkräfte ausüben kann. Ein weiteres Problem besteht darin, daß einander in Abstand gegenüberliegende Kanten, die einen Schraubenkanal definieren, nur sehr schlecht zur Führung der Schraube geeignet sind. Der erfindungsgemäße Schraubenkanal wird anders als im Stand der Technik nicht von Kanten definiert, sondern von Flächen. Dies hat zum einen den Vorteil, daß einer einzuschraubenden Schraube eine sehr viel bessere Führung angeboten wird. Zum anderen ergibt sich der Vorteil, daß vergleichsweise viel Material zur Verfügung steht, welches von der Schraube verdrängt werden muß. Auf diese Weise werden höhere Spreizkräfte erzielt.

Der Schraubenkanal hat einen H-förmigen Querschnitt. Diese Form des Querschnitts kann besonders leicht mit mehreren beweglichen Schiebern in einer Spritzgußmaschine hergestellt werden, da die erforderlichen äußeren Schieber bündig auf dem mittleren Schieber aufliegen können.

Gemäß einer Ausführungsform der Erfindung ist vorgesehen, daß zwei einander gegenüberliegende Segmente als Drehsperr-Segmente ausgebildet sind. Es ist nicht erforderlich, separate Flügel oder anderes vorzusehen, welches verhindert, daß sich der Dübel im Bohrloch mitdreht, wenn die Schraube eingeschraubt wird. Stattdessen ist es in einfacher Weise möglich, die Drehsperr-Segmente in radialer Richtung weiter nach außen ragen zu lassen als die dazwischenliegenden Segmente, so daß die Drehsperr-Segmente durch elastische Federkraft an der Wandung der Bohrung anliegen und ein Mitdrehen des Dübels verhindern.

Vorteilhafte Ausgestaltungen der Erfindung ergeben sich aus den Unteransprüchen.

Die Erfindung wird nachfolgend anhand einer Ausführungsform erläutert, die in den beigefügten Zeichnungen dargestellt ist. In diesen zeigen:

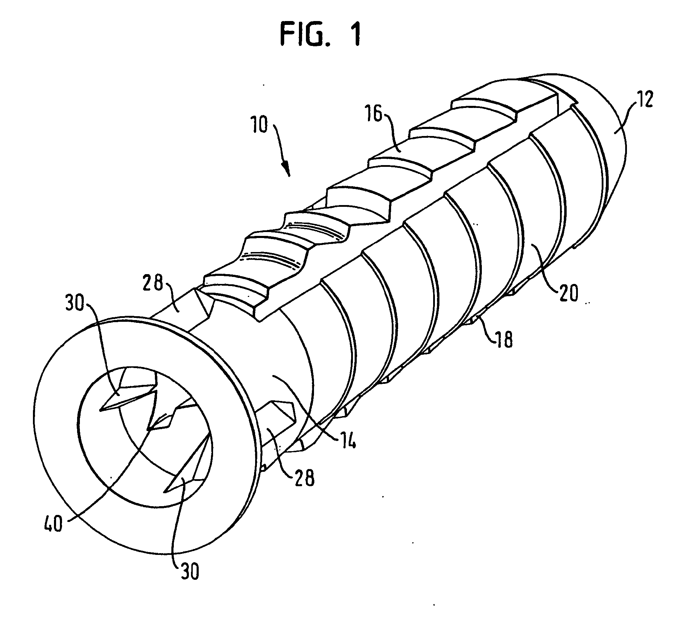

- Figur 1 eine perspektivische Ansicht eines erfindungsgemäßen Dübels;

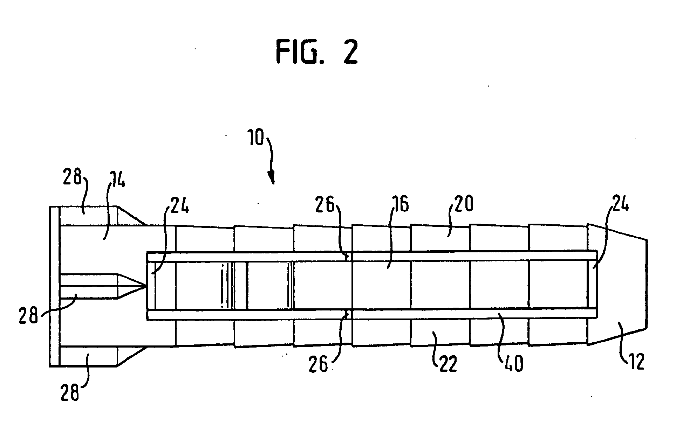

- Figur 2 eine Seitenansicht des erfindungsgemäßen Dübels;
- Figur 3 eine Vorderansicht des erfindungsgemäßen Dübels;

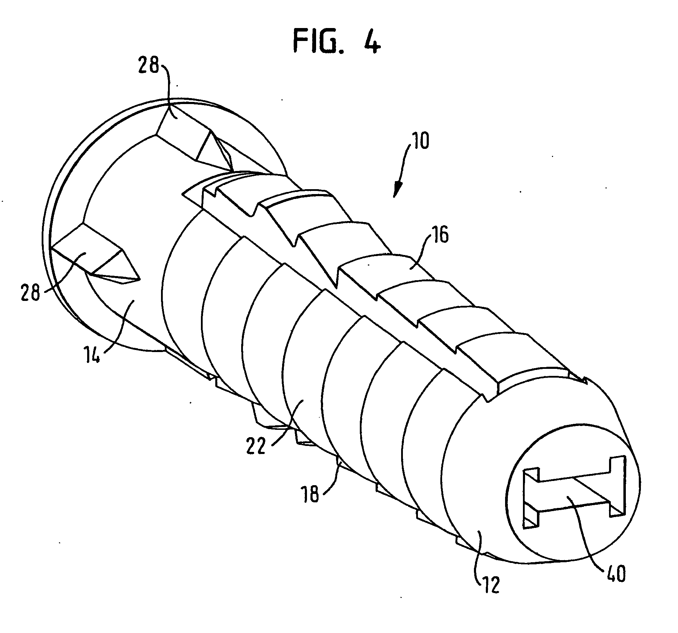

- Figur 4 eine weitere perspektivische Ansicht des erfindungsgemäßen Dübels;

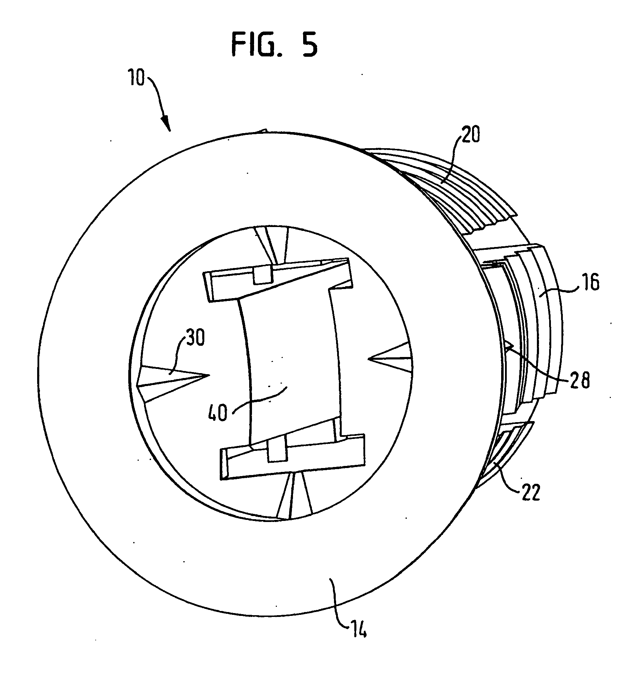

- Figur 5 eine perspektivische Rückansicht des erfindungsgemäßen Dübels;

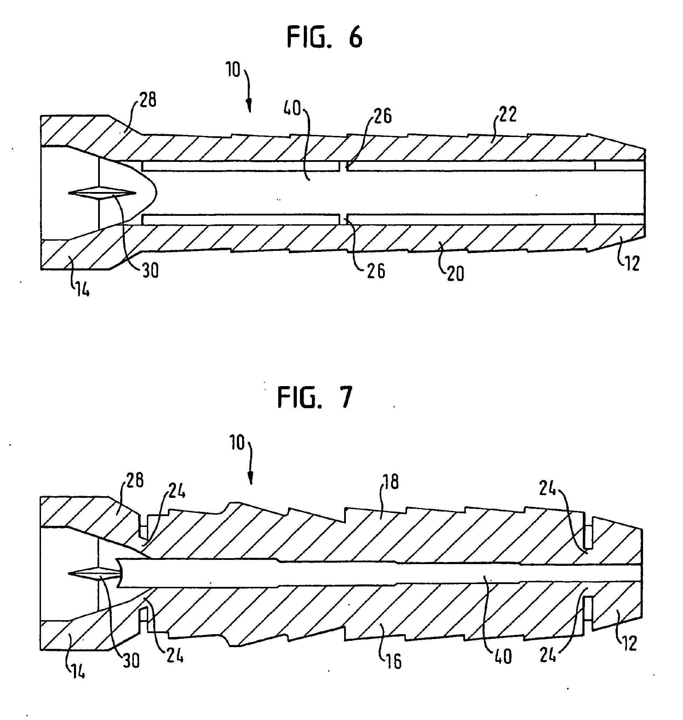

- Figur 6 einen Längsschnitt des erfindungsgemäßen Dübels; und
- Figur 7 einen zweiten Längsschnitt des Dübels, wobei die Schnittachse gegenüber dem Schnitt von Figur 6 um 90° gedreht ist.

In den Figuren ist ein Dübel 10 gezeigt, der ein Vorderende 12, ein Hinterende 14 und vier Segmente 16, 18, 20, 22 aufweist, welche das Vorderende 12 und das Hinterende 14 miteinander verbinden. Das Vorderende 12 ist als in Umfangsrichtung geschlossener, kegelstumpfförmiger Körper ausgebildet. Das Hinterende 14 ist als ebenfalls in Umfangsrichtung geschlossener, hülsenförmiger Körper mit Bund ausgebildet. Von den Segmenten sind zwei Segmente 16, 18 als Drehsperr-Segmente ausgebildet. Die beiden anderen Segmente 20, 22 sind als Flächenpreß-Segmente ausgebildet.

Die Drehsperr-Segmente 16, 18 weisen mehrere Zähne auf, die aus mehreren vorderen, gleichen Zähnen, einigen weiter vorstehenden, mittleren Zähnen sowie einem hinteren Zahn bestehen. Die Drehsperr-Segmente 16 stehen weiter über den Außenumfang des Dübels hinaus, der vom Vorderende 12, dem Hinterende 14 und den Flächenpreß-Segmenten 20, 22 definiert wird. Jedes Drehsperr-Segment 16, 18 ist mit dem Vorderende 12 und dem Hinterende 14 über Federbrücken 24 verbunden. Die Federbrücken sind gebildet durch Einschnitte, so daß zwischen dem Drehsperr-Segment und dem Vorderende bzw. dem Hinterende nur ein dünner Materialsteg stehen bleibt. Die Federbrücken 24 ermöglichen es den Drehsperr-Segmenten 16, 18, elastisch zum Inneren des Dübels hin nachzugeben. Zwischen benachbarten Segmenten sind kleine Versteifungsstege 26 vorgesehen.

Die Flächenpreß-Segmente 20, 22 sind auf ihrer Außenseite mit einer nahezu durchgehend glatten Fläche versehen. Es sind lediglich andeutungsweise einige sehr flache Zähne zu erkennen.

Das Hinterende 14 des Dübels ist auf seiner Außenfläche mit mehreren Sperr-Rippen 28 versehen. Auf seiner Innenseite ist das Hinterende 14 mit mehreren Anlagerippen 30 versehen.

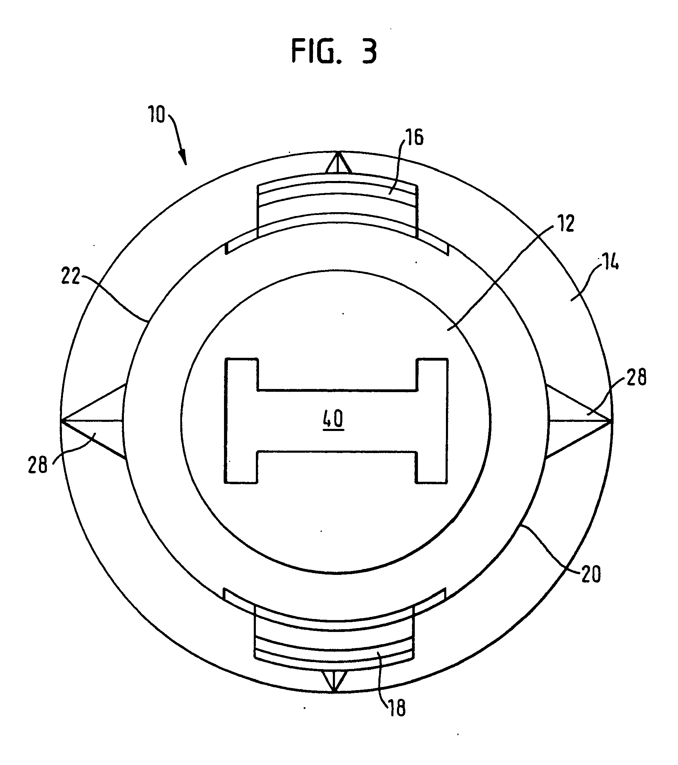

Im Inneren des Dübels ist ein Schraubenkanal 40 gebildet, der definiert wird durch im wesentlichen vier ebene Flächen. Diese Flächen sind gebildet durch die Innenseiten der Segmente 16, 18, 20, 22. Wie insbesondere in Figur 3 zu sehen ist, hat der Schraubenkanal 40 einen H-förmigen Querschnitt. Der Schraubenkanal 40 hat im Bereich des Vorderendes 12 und der Segmente 16, 18, 20, 22 durchgehend denselben Querschnitt. Der Mittelsteg des H-förmigen Querschnitts wird definiert durch die beiden Drehsperr-Segmente 16, 18, die einander in einem vergleichsweise geringen Abstand gegenüberliegen. Die beiden Querbalken des H-förmigen Querschnitts werden definiert durch die Flächenpreß-Segmente 20, 22. Der Abstand zwischen den Innenflächen dieser Segmente ist sehr viel größer als der Abstand zwischen den Innenflächen der Drehsperr-Segmente 16, 18.

Der Nenndurchmesser des Dübels und damit auch der Durchmesser des für ihn vorgesehenen Bohrlochs ist bestimmt durch den Durchmesser, der von den Flächenpreß-Segmenten 20, 22 bestimmt ist. Die Drehsperr-Segmente 16, 18 stehen über den Nenndurchmesser hinaus. Bei einem Nenndurchmesser des Dübels von 10 mm definieren die Drehsperr-Segmente 16, 18, wenn sie sich in ihrer Ausgangsstellung befinden, einen Durchmesser in der Größenordnung von 11 bis 12 mm.

Wenn der Dübel in ein Bohrloch mit seinem Nenndurchmesser eingesetzt wird, federn die Drehsperr-Segmente 16, 18 elastisch nach innen zurück. Die hierfür notwendige Elastizität wird von den Federbrücken 24 gewährleistet. Wenn der Dübel ins Bohrloch eingeschoben ist, liegen die Drehsperr-Segmente 16, 18 durch ihre elastischen Rückstellkräfte an der Innenwand des Bohrlochs an, so daß durch die sich ergebenden Reibungskräfte verhindert ist, daß sich der Dübel mitdreht, wenn eine Schraube eingeschraubt wird. Ergänzend wirken die Sperr-Rippen 28.

Um einen Dübel in ein Bohrloch einzusetzen, wird häufig eine Schraube in den Dübel hineingedrückt und dann der Dübel mittels der Schraube in das Bohrloch eingeschlagen. Bei dem beschriebenen Dübel dienen die Anlagerippen 30 dafür, der Schraube einen Widerstand entgegenzusetzen, damit diese nicht so weit in den Schraubenkanal 40 eingeschoben werden kann, daß sie das elastische Rückfedern der Drehsperr-Segmente 16, 18 verhindert. Wenn nach dem vollständigen Einsetzen des Dübels in das Bohrloch die Schraube weiter in den Schraubenkanal 40 eingeschoben wird, spreizt die Schraube die Segmente 16, 18, 20, 22 nach außen. Da die Segmente an der Schraube mit einer ebenen Fläche anliegen, kann die Schraube eine sehr große Spreizkraft auf die Segmente ausüben; es steht sehr viel Dübelmaterial zur Kraftübertragung zur Verfügung. Auch wird die Schraube sauber im Schraubenkanal 40 geführt, da die geraden Flächen auf der Innenseite der Segmente verhindern, daß die Schraube in den Spalt zwischen einzelne Segmente rutscht.

## Patentansprüche

1. Dübel (10), insbesondere für Vollbaustoffe, mit einem Schaft, der aus vier Segmenten (16, 18, 20, 22) besteht, die einander paarweise gegenüberliegen und einen Schraubenkanal (40) definieren, der von Flächen begrenzt wird, **dadurch gekennzeichnet, daß** der Schraubenkanal (40) einen H-förmigen Querschnitt hat.

2. Dübel nach Anspruch 1, **dadurch gekennzeichnet, daß** die den Schraubenkanal (40) definierenden Flächen eben sind.

3. Dübel nach einem der vorhergehenden Ansprüche, **dadurch gekennzeichnet, daß** zwei einander gegenüberliegende Segmente (20, 22) als Flächenpreß-Segmente ausgebildet sind, die ein ebene oder wenigstens annähernd ebene Außenfläche aufweisen.

4. Dübel nach einem der vorhergehenden Ansprüche, **dadurch gekennzeichnet, daß** zwei einander gegenüberliegende Segmente (16, 18) als Zahn-Segmente ausgebildet sind, die auf ihrer Außenfläche mehrere Zähne aufweisen.

5. Dübel nach einem der vorhergehenden Ansprüche, **dadurch gekennzeichnet, daß** zwei einander gegenüberliegende Segmente als Drehsperr-Segmente (16, 18) ausgebildet sind.

6. Dübel nach Anspruch 5, **dadurch gekennzeichnet, daß** die beiden Drehsperr-Segmente (16, 18) in radialer Richtung weiter nach außen ragen als die dazwischenliegenden Segmente.

7. Dübel nach Anspruch 5 oder Anspruch 6, **dadurch gekennzeichnet, daß** die Drehsperr-Segmente (16, 18) mit Zähnen auf ihrer Außenseite versehen sind.

8. Dübel nach einem der Ansprüche 5 bis 7, **dadurch gekennzeichnet, daß** die Drehsperr-Segmente (16, 18) in radialer Richtung elastisch nachgiebig sind.

9. Dübel nach Anspruch 8, **dadurch gekennzeichnet, daß** die Drehsperr-Segmente (16, 18) durch Federbrücken (24) angebunden sind.

## Claims

1. A plug (10), in particular for solid building materials, having a shank composed of four segments (16, 18, 20, 22) which are arranged opposite each other in pairs and define a screw channel (40) delimited by faces, **characterized in that** the screw channel (40) has an H-shaped cross-section.

2. The plug according to claim 1, **characterized in that** the faces defining the screw channel (40) are flat.

3. The plug according to any of the preceding claims, **characterized in that** two segments (20, 22) that are opposite each other are configured as surface pressing segments having a flat or at least approximately flat outer surface.

4. The plug according to any of the preceding claims, **characterized in that** two segments (16, 18) that are opposite each other are configured as toothed segments the outer surface of which is provided with several teeth.

5. The plug according to any of the preceding claims, **characterized in that** two segments that are opposite each other are configured as rotation locking segments (16, 18).

6. The plug according to claim 5, **characterized in that** the two rotation locking segments (16, 18) project further outwards in the radial direction than the segments arranged therebetween.

7. The plug according to claim 5 or claim 6, **characterized in that** the outside of the rotation locking segments (16, 18) is provided with teeth.

8. The plug according to any of claims 5 to 7, **characterized in that** the rotation locking segments (16, 18) are elastically resilient in the radial direction.

9. The plug according to claim 8, **characterized in that** the rotation locking segments (16, 18) are connected by means of spring bridges (24).

## Revendications

1. Cheville (10), en particulier pour matériaux de construction pleins, comportant une tige qui est constituée par quatre segments (16, 18, 20, 22) qui sont opposés les uns aux autres par paire et définissent un canal à vis (40) qui est limité par des surfaces, **caractérisée en ce que** le canal à vis (40) a une section transversale en forme de H.

2. Cheville selon la revendication 1, **caractérisée en ce que** les surfaces définissant le canal à vis (40) sont planes.

3. Cheville selon l'une des revendications précédentes, **caractérisée en ce que** deux segments (20, 22) opposés l'un à l'autre sont réalisés sous forme de segments de pression de surface qui présentent une surface extérieure plane ou au moins approximativement plane.

4. Cheville selon l'une des revendications précédentes, **caractérisée en ce que** deux segments (16, 18) opposés l'un à l'autre sont réalisés sous forme de segments dentés qui présentent plusieurs dents sur leur surface extérieure.

5. Cheville selon l'une des revendications précédentes, **caractérisée en ce que** deux segments opposés l'un à l'autre sont réalisés sous forme de segments de blocage de rotation (16, 18).

6. Cheville selon la revendication 5, **caractérisée en ce que** les deux segments de blocage de rotation (16, 18) font saillie en direction radiale plus loin vers l'extérieur que les segments situés entre eux.

7. Cheville selon la revendication 5 ou la revendication 6, **caractérisée en ce que** les segments de blocage de rotation (16, 18) sont pourvus de dents sur leur côté extérieur.

8. Cheville selon l'une des revendications 5 à 7, **caractérisée en ce que** les segments de blocage de rotation (16, 18) sont élastiquement souples en direction radiale.

9. Cheville selon la revendication 8, **caractérisée en ce que** les segments de blocage de rotation (16, 18) sont raccordés par des ponts à ressort (24).
